# EUROPEAN PATENT SPECIFICATION

(11) **EP 4 585 827 B1**
(45) Date of publication and mention of the grant of the patent: **04.11.2026**
(21) Application number: 25150919.6
(22) Date of filing: 09.01.2025
(51) Int. Cl.: F16H 3/00, B60K 6/48, F16H 3/091, F16H 3/089

(54) **APPARATUS WITH A DUAL-CLUTCH GEARBOX FOR A MOTOR VEHICLE**
VORRICHTUNG MIT EINEM DOPPELKUPPLUNGSGETRIEBE FÜR EIN KRAFTFAHRZEUG
DISPOSITIF AVEC UNE BOÎTE DE VITESSES À DOUBLE EMBRAYAGE POUR UN VÉHICULE AUTOMOBILE

(30) Priority: 10.01.2024 IT 202400000330
(43) Date of publication of application: 16.07.2025
(73) Proprietor: FERRARI S.p.A., 41100 Modena (IT)
(72) Inventor: CAVALLINO, Carlo, 41100 MODENA (IT); FODERARO, Antonio, 41100 MODENA (IT)
(74) Representative: Studio Torta S.p.A.

(56) References cited:
- WO-A1-2019/019293
- CN-U- 205 423 703
- DE-A1- 102010 010 436
- US-A1- 2011 198 139

## Description

### TECHNICAL FIELD

The invention relates to an apparatus with a dual-clutch gearbox for a motor vehicle.

### PRIOR ART

As it is known, some electric hybrid motor vehicles, namely provided with an internal combustion engine and with at least one electric motor-generator for the propulsion, are provided with a dual-clutch gearbox.

Typically, a dual-clutch gearbox includes a secondary shaft or output shaft defining an output of the gearbox or connected to at least one axle of the motor vehicle, as well as two primary shafts respectively connected to an input of the gearbox by means of respective clutches arranged in parallel and defining a dual clutch.

The two primary shafts respectively carry first and second gearwheels, which, by meshing with corresponding third gearwheels carried by the secondary shaft, determine a first group of gears, normally the even gears, and a second group of gears, normally the odd gears, respectively.

For the engagement of one of the gears, one of the two gearwheels forming the gear to be engaged is caused to become rotationally fixed to the related carrying shaft among the primary shafts and the secondary shaft by means of an engagement device, for example a synchronizer, while the other of the two gearwheels is configured, in itself, to be rotationally fixed to the related carrying shaft among the primary shafts and the secondary shaft.

In some cases, the electric motor-generator has a rotor connected to one of the gearwheels carried by one of the primary shafts and fixable in a rotatable manner to the latter by means of the related engagement device.

In this way, by means of the latter engagement device, the electric motor-generator can be selectively connected to the internal combustion engine for starting the latter or for generating electrical energy by means of the power supplied by the latter.

However, with this gearbox architecture, the connection between the internal combustion engine and the motor-generator also implies a transmission of torque to the wheels as the gear comprising the gearwheel to which the rotor of the motor-generator is connected is inevitably engaged.

Therefore, a drawback associated with the architecture described above is the impossibility of connecting the internal combustion engine and the electric motor-generator when the wheels are not moving.

Hence, it is necessary to provide a dual-clutch gearbox that is free from the drawback set out above while avoiding an excessive complication of the architecture of the gearbox itself.

DE102010010436A1 discloses an apparatus with a dual-clutch gearbox comprising the features of the preamble of claim 1.

The object of the invention is to fulfil the need discussed above in a simple and reliable fashion.

### DESCRIPTION OF THE INVENTION

Said object is reached by an apparatus with a dual-clutch gearbox as defined in claim 1.

The dependent claims define particular embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is a perspective view of a motor vehicle comprising an apparatus with a dual-clutch gearbox according to the invention; and
- figure 2 is a schematic, cross-sectional representation of the architecture of the dual-clutch gearbox.

### EMBODIMENTS OF THE INVENTION

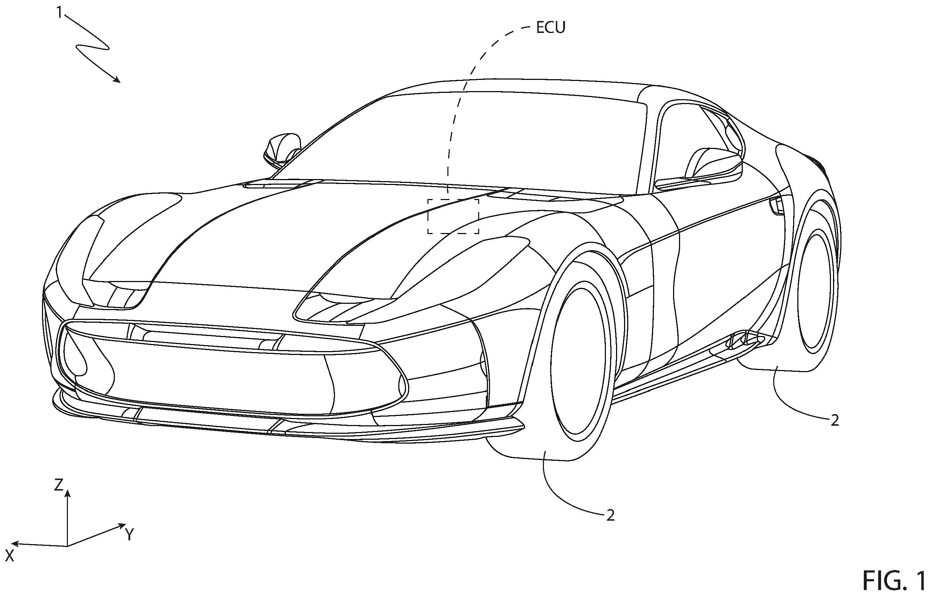

In figure 1, reference number 1 is used to indicate, as a whole, a motor vehicle.

The motor vehicle 1 comprises four wheels 2, at least two of them being drive wheels and being coupled to one another by means of an axle, for example of a known type and not shown.

The motor vehicle 1 further comprises a power or torque source 3, in particular an internal combustion engine.

The motor vehicle 1 further comprises an apparatus comprising, in turn, a further source of power or torque, in particular an electric motor-generator 4, and a dual-clutch gearbox 5.

The dual-clutch gearbox 5 comprises an input shaft 6 connected to the source 3, namely caused to rotate by the source 6. Specifically, the shaft 6 extends along an axis A, for example a straight axis.

Furthermore, the gearbox 5 comprises two primary shafts 7, 8, namely a first and a second shaft 7, 8, in other words.

The shaft 7 specifically extends along an axis B (for example, a straight axis), in particular parallel to and more in particular coinciding with the axis A.

Preferably, the shaft 8 is coaxial to the shaft 7, namely it extends along an axis C that is parallel to and coinciding with the axis B. Alternatively, the axis C could only be parallel to and not coinciding with the axis B or not even parallel to the axis B, according to variants that are not shown herein.

The shaft 7 carries a plurality of gearwheels 9', 10', 11', each of which can be carried in a fixed manner by the shaft 7, namely can be attached to the shaft 7, or in a rotatable manner with respect to the shaft 7 around the axis B, i.e. so as to be able to rotate around the axis B independently of the rotation of the shaft 7.

In this way, the gearwheels of the gearwheels 9', 10', 11' carried in a fixed manner define elements of a set of first rotationally fixed gearwheels, while the gearwheels of the gearwheels 9', 10', 11' carried in a rotatable manner define elements of a set of first rotatable or engageable gearwheels.

Similarly, the shaft 8 carries a plurality of gearwheels 12', 13', 14', 15', each of which can be carried in a fixed manner by the shaft 8, i.e. can be attached to the shaft 8, or in a rotatable manner with respect to the shaft 8 around the axis C, i.e. so as to be able to rotate around the axis C independently of the rotation of the shaft 8.

In this way, the gearwheels of the gearwheels 12', 13', 14', 15' carried in a fixed manner define elements of a set of second rotationally fixed gearwheels, while the gearwheels of the gearwheels 12', 13', 14', 15' carried in a rotatable manner define elements of a set of second rotating or engageable gearwheels.

Furthermore, the gearbox 5 comprises an output shaft or secondary shaft 16 connected to the axle or (drive) wheels 2, namely configured to transmit a rotation thereof to the axle or to the wheels 2.

The output shaft 16 extends along an axis D, for example a straight axis, specifically parallel to the axis B and, independently, also to the axis C.

The output shaft 16 carries a plurality of gearwheels 9", 10", 11 ", 12", 13", 14", 15" respectively meshing with the gearwheels 9', 10', 11', 12', 13', 14', 15' to form respective gears 9, 10, 11, 12, 13, 14, 15.

The gearwheels of the gearwheels 10", 11", 12", 13", 14", 15'' that respectively mesh with the engageable gearwheels are carried in a fixed manner by the shaft 16, thus defining respective elements of a third set of rotationally fixed gearwheels, while the gearwheels of the gearwheels 10", 11", 12", 13", 14", 15" that mesh with the rotationally fixed gearwheels are carried in a rotatable manner with respect to the shaft 16 around the axis D, thus defining respective elements of a third set of engageable gearwheels.

In the embodiment shown herein, the gearwheel 10' and, independently, the gearwheels 12', 13' are engageable gearwheels, namely they are carried by the shaft 7 and the shaft 8 in a rotatable manner around the axes B and C, respectively.

Consequently, the gearwheels 10", 12", 13" are rotationally fixed gearwheels, namely they are carried by the shaft 16 in a rotationally fixed manner with respect to the shaft 16.

In addition, the gearwheel 11' and, independently, the gearwheels 14', 15' are rotationally fixed gearwheels, namely they are carried by the shaft 7 and the shaft 8 in a fixed manner with respect to the shaft 7 and the shaft 8, namely they are attached to them, respectively.

Consequently, the gearwheels 11", 14", 15" are engageable gearwheels, namely they are carried by the shaft 16 in a rotatable manner with respect to the shaft 16 around the axis D.

The gearwheels 9', 9'' meshing with each other to form the gear 9 are both carried by the respective shafts 7, 16 in a rotatable manner with respect to the shafts 7, 16, respectively, whereby the gearwheels 9', 9" are both engageable gearwheels, i.e. forming part of the set of first and third engageable gearwheels, respectively, namely defining respective elements of the set of first engageable gearwheels and of the set of third engageable gearwheels.

In order to engage the gears 9, 10, 11, 12, 13, 14, 15, the gearbox 5 comprises a plurality of engagement devices, including an engagement device 17 configured or controllable to selectively connect one of the shaft 7 and the shaft 8 to the input shaft 6, so that the connected shaft of the shafts 7, 8 is caused to rotate by the rotation of the shaft 6 or by the source 3, as well as engagement or selection devices 18, 19, 20, 21, 22 configured or controllable to engage, i.e. to rotationally fix the engageable gearwheels to the related carrying shafts among the shafts 7, 8, 16.

The apparatus of the motor vehicle 1 comprises a control unit ECU configured to control each of the engagement devices 17, 18, 19, 20, 21, 22.

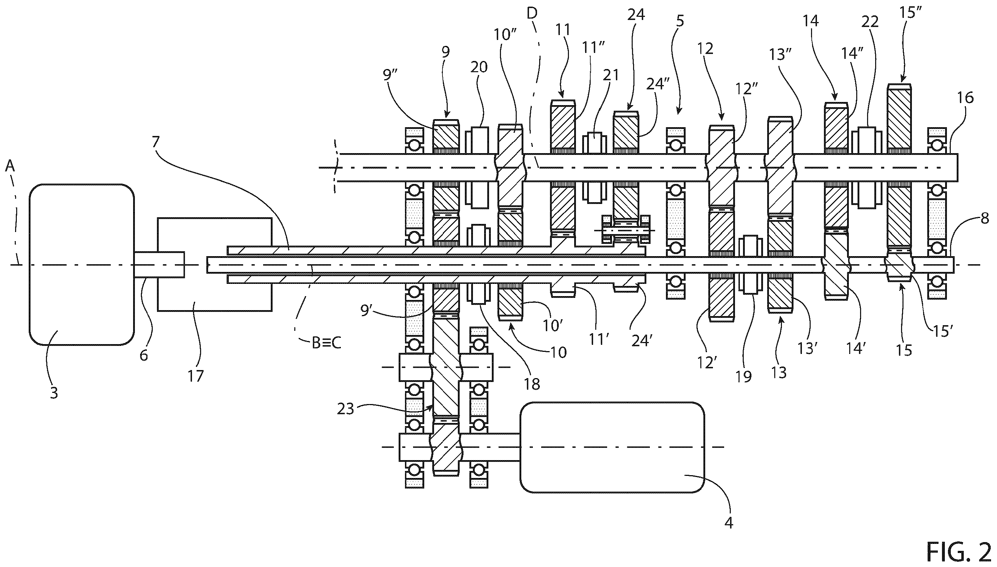

In particular, the engagement device 17 is a dual clutch (for example of a known type, which is schematically shown in figure 2 with a rectangle), namely a device comprising two clutches respectively configured or controllable to connect the shaft 7 and the shaft 8 to the shaft 6 in an alternative manner.

The engagement or selection devices 18, 19, 20, 21, 22 could be toothed dog-clutches or synchronizers.

Preferably, the engagement device 20 is a dog-clutch.

Furthermore, preferably, each of the engagement devices 18, 19, 21, 22 is a synchronizer.

Specifically, the engagement device 18 is configured or controllable to selectively engage, i.e. to rotationally fix to the shaft 7, one of the gearwheels 9', 10' (namely, one of the first engageable gearwheels).

Therefore, as already mentioned above, the gearwheel 10", namely one of the third rotationally fixed gearwheels that meshes with the gearwheel 10', is carried in a fixed manner by the output shaft 16, in particular in a position adjacent to or facing the gearwheel 9".

Hence, the function of the engagement device 18 is shared by the gearwheels 9', 10'; this is however not to be understood as a necessarily limiting example, since the engagement device 18 can be functionally considered as two independent engagement devices, each of which is dedicated to engaging the corresponding one of the gearwheels 9', 10'. As a matter of fact, the engagement device 18 is controlled to engage the gearwheel 9' or the gearwheel 10' in an alternative manner, whereby it cannot simultaneously engage the gearwheels 9', 10'. In addition, the engagement device 18 could also be replaced by two totally independent and separate engagement devices, as well as dedicated to engaging the wheels 9', 10', respectively. Similar observations also apply to the other engagement or selection devices 19, 21, 22, which is why they will not be repeated for the sake of brevity.

In particular, the engagement device 18 (namely, the engagement device for the gearwheel 9') is carried by the shaft 7 axially between the gearwheels 9', 10' (namely, one of the first engageable gearwheels), more in particular in an axially movable manner along the axis B.

The engagement device 19 is configured or controllable to selectively engage, i.e. to rotationally fix to the shaft 8, one of the gearwheels 12', 13'.

In particular, the engagement device 19 is carried by the shaft 8 axially between the wheels 12', 13', more in particular in an axially movable manner along the axis C.

The engagement device 20 is configured or controllable to selectively engage, i.e. to rotationally fix to the shaft 16, the gearwheel 9".

In particular, the engagement device 20 is carried by the shaft 16 axially between the gearwheels 9", 10", more in particular in an axially movable manner along the axis D.

In other words, since the gearwheel 10'' is, in particular, one of the rotationally fixed gearwheels, the engagement device 20 is carried by the shaft 16 axially between one of the third engageable gearwheels (the gearwheel 9") and one of the third rotationally fixed gearwheels.

Therefore, the engagement device 20 is independent or movable independently of any other of the engagement devices 17, 18, 19, 20, 21, 22 or, more generally, any other engagement device.

In other words, the engagement device 20 is configured or controllable to exclusively engage the gearwheel 9", namely to engage the gearwheel 9'' in a dedicated manner, i.e. it is arranged or configured not to control or not to be able to control other gearwheels in addition to the gearwheel 9".

Therefore, alternatively, the gearwheel 9'' is axially arranged between the engagement device 20 and all the other gearwheels carried by the output shaft 16.

The engagement device 21 is configured or controllable to selectively engage, i.e. to rotationally fix to the shaft 16, the gearwheel 11".

In particular, the engagement device 21 is axially by the shaft 16 axially between the gearwheels 11", 12", more in particular in an axially movable manner along the axis D.

The engagement device 22 is configured or controllable to selectively engage, i.e. to rotationally fix to the shaft 16, one of the gearwheels 14", 15".

In particular, the engagement device 22 is carried by the shaft 16 axially between the gearwheels 14", 15", more in particular in an axially movable manner along the axis D.

To sum up, the gearbox 5 comprises a first engagement device (here, the device 18) for each of the first engageable gearwheels (here, the gearwheels 9', 10'), a second engagement device (here, the device 19) for each of the second engageable gearwheels (here, the gearwheels 12', 13') and a third engagement device (here, one of the devices 20, 21, 22) for each of the third engageable gearwheels (here, the gearwheels 9", 11", 14", 15").

Clearly, in the event that the set of second engageable gearwheels were an empty set, i.e. for example in the event that none of the gearwheels 12', 13', 14', 15' were carried in a rotatable manner with respect to the shaft 8, the second engagement device would be superfluous and therefore absent.

The motor-generator 4 comprises a rotor (not shown) coupled or connected to the gearwheel 9' through a transmission 23, for example comprising or defined by a reduction gear unit, such that a rotation of the rotor can be transmitted to the gearwheel 9' and vice versa.

For example, the transmission 23 can comprise an engagement or clutch device (not shown) to selectively determine and interrupt the coupling or connection between the rotor and the gearwheel 9'.

The gears 9, 10, 11, 12, 13, 14, 15 define seven respective gear ratios or gears numerically reorderable in an ascending order from a first gear ratio or gear to a seventh gear ratio or gear corresponding to seven respective degrees of reduction of the input angular speed (angular speed of one of the shafts 7, 8) gradually decreasing from the first to the seventh gear ratio. In other words, the angular speed of the shaft 16 is reduced with respect to the input angular speed by means of the gears 9, 10, 11, 12, 13, 14, 15 according to the respective gear ratios.

Herein, the gear ratio is defined as a reduction ratio, i.e. as a number smaller than or equal to one resulting from the ratio between the angular speed of the shaft 16 and the input angular speed (angular speed of the shaft 7 or 8, depending on the engaged gear of the gears 9, 10, 11, 12, 13, 14, 15).

The first gear ratio is the smallest, while the seventh gear ratio is the greatest, namely the closest to one. The gear ratios are therefore increasing from the first to the seventh gear ratio, in numerical order.

The gear ratios are divisible into even ratios and odd ratios according to their numerical order (first, third, fifth and seventh are odd ratios, while second, fourth and sixth are even ratios). Consequently, the gears 9, 10, 11, 12, 13, 14, 15, each of which is associable with a corresponding one of the gear ratios, can define the even gears 9, 10, 11 and the odd gears 12, 13, 14, 15, 16 as well. Hence, the even gears 9, 10, 11 define the even ratios, while the odd gears 12, 13, 14, 15 define the odd ratios.

The gear 9 preferably defines the fourth gear ratio. In other words, the gearwheel 9'' has a diameter that is larger than that of three other of the wheels 10", 11", 12", 13", 14", 15'' and smaller than that of three other of the wheels 10", 11'', 12'', 13", 14", 15'', namely a median diameter.

Furthermore, the gear 10 preferably defines the sixth gear ratio. In other words, the gearwheel 10" has a diameter that is smaller than that of five other of the wheels 9", 11", 12", 13", 14", 15" and larger than that of another of the wheels 9", 11", 12", 13", 14", 15".

According to an alternative that is not shown herein, the gear 9 could define the sixth gear ratio, while the gear 10 would define, in this case, the fourth gear ratio.

Therefore, the gear 9 defines one of the fourth and the sixth gear ratio, while the gear 10 defines the other one of the fourth and the sixth gear ratio.

Furthermore, the gear 11 preferably defines the second gear ratio. In other words, the gearwheel 11'' has a diameter that is larger than that of five other of the wheels 9", 10", 12", 13", 14", 15" and smaller than that of another of the wheels 9", 10", 12", 13", 14", 15".

The gear 10 is axially arranged between the gears 9, 11 (according to the axis B or the axis D). Therefore, one of the fourth and the sixth gear ratio is axially arranged between the second gear ratio and the other one of the fourth and the sixth gear ratio.

Independently, the gear 11 is axially arranged between the gears 10, 12 (according to the axis B or D).

Independently, the gear 9 is axially arranged between the gear 10 (namely, one of the other gears) and the engagement device 17 (according to the axis B or D).

The gear 12 preferably defines the seventh gear ratio. In other words, the gearwheel 12'' has the smallest diameter with respect to the other gearwheels 9", 10", 11", 13", 14", 15".

Furthermore, the gear 13 preferably defines the fifth gear ratio. In other words, the gearwheel 13" has a diameter that is larger than that of two other of the wheels 9", 10", 11", 12", 14", 15" and smaller than that of four other of the wheels 9'', 10", 11", 12", 14", 15".

Furthermore, the gear 14 preferably defines the third gear ratio. In other words, the gearwheel 14" has a diameter that is smaller than that of two other of the wheels 9", 10", 11", 12", 13", 15" and larger than that of four other of the wheels 9'', 10", 11", 12", 13", 15".

Furthermore, the gear 15 preferably defines the first gear ratio. In other words, the gearwheel 15" has the largest diameter with respect to that of the gearwheels 9", 10", 11", 12", 13", 14".

In particular, the gear 12 is axially arranged between the gears 11, 13 (according to the axis C or the axis D).

Independently, in particular, the gear 13 is axially arranged between the gears 12, 14 (according to the axis B or D).

Independently, in particular, the gear 14 is axially arranged between the gears 14, 15 (according to the axis B or D).

Therefore, according to the embodiment shown herein, the diameter of the gearwheel 9" is between that of the gearwheel 13" and that of the gearwheel 14".

The diameter of the gearwheel 10" is between that of the gearwheel 12" and that of the gearwheel 13".

The diameter of the gearwheel 11'' is between that of the gearwheel 14" and that of the gearwheel 15".

The diameter of the gearwheel 13" is between that of the gearwheel 9'' and that of the gearwheel 10".

The diameter of the gearwheel 14" is between that of the gearwheel 11'' and that of the gearwheel 9".

Furthermore, more generally, two axially adjacent gears of the gears 9, 10, 11, 12, 13, 14, 15 define respective gear ratios astride (according to their numerical order) the one defined by another non-adjacent gear of the gears 9, 10, 11, 12, 13, 14, 15. More in detail, if the two axially adjacent gears are even, the other non-adjacent gear is odd and vice versa (if the two adjacent gears are odd, the other is even).

Optionally, the gearbox 5 further comprises a reverse gear 24 comprising at least two gearwheels 24', 24" respectively carried by one of the shafts 7, 8 and the shaft 16.

Specifically, the gearwheel 24" is carried by the shaft 16 in a rotatable manner with respect to it around the axis D, while the gearwheel 24' is carried by one of the shafts 7, 8, in a fixed manner with respect to it, namely it is attached to it. Alternatively, according to a variant which is not shown herein, the gearwheel 24' could have been carried by one of the shafts 7, 8 in a rotatable manner with respect to it around the axis B or C, while the gearwheel 24" could have been carried by the shaft 16 in a fixed manner with respect to it.

Specifically, moreover, the gearwheel 24" is selectively rotationally fixable to the shaft 16 by means of an engagement device, in particular by means of the engagement device 21. Herein, the engagement device 21 is axially arranged (according to the axis D or B) between the reverse gear 24 and the gear 11, more in particular between the gearwheels 24", 11". According to the variant that is not shown herein, the gearwheel 24' could have been selectively rotationally fixable to one of the shafts 7, 8 by means of an engagement device.

Therefore, the gearwheel 24' could define an element of the set of first engageable gearwheels or of the second engageable gearwheels depending on whether it is carried by the shaft 7 or by the shaft 8, respectively. Alternatively, the gearwheel 24" could define an element of the set of third engageable gearwheels.

In the embodiment shown herein, the gearwheel 24' is carried by the shaft 7 and, more in particular, is carried in a fixed manner by the shaft 7, whereby the gearwheel 24" is carried in a rotatable manner with respect to the shaft 16, namely it defines an element of the set of third engageable gearwheels.

The gear 11 forms, with the reverse gear 24, a gear group that is distinct from the gear group formed by the gear 10 and possibly by the gear 9.

The gear group 11, 24 is axially arranged between the gear group 9, 10 and the gears 12, 13, 14, 15, according to the axis B or C.

Therefore, according to a variant that is not shown herein, the gears 11, 24 could be switched in position with the engagement device 21 axially between them.

In the embodiment shown herein, the gears 10, 11 are axially arranged (according to the axis B or D) between the gear 9 and the reverse gear 24, although the reverse gear 24 could be axially arranged between the gears 9, 10 and the gear 11, according to the variant that is not shown herein.

Furthermore, independently, in the embodiment shown herein, the reverse gear 24 is axially arranged (according to the axis B or D) between the gears 10, 11 (possibly also including the gear 9) and the gears 12, 13, 14, 15.

The gear 11 is axially arranged (according to the axis B or D) between the gear 10 and the reverse gear 24.

The gear 12 is axially arranged (according to the axis B or D) between the gear 13 and the reverse gear 24.

More in general, the gears 12, 13 and the gears 14, 15 form respective gear groups, one of which can be arranged between the other and the gear group 11, 24. Herein, the gear group 12, 13 is arranged between the gear group 11, 24 and the gear group 14, 15, although the latter could have been arranged between the gear group 12, 13 and the gear group 11, 24, according to a variant. Furthermore, the gears 12, 13 as well as, independently, the gears 14, 15 could be axially switched in position, according to variants that are not shown herein.

Furthermore, the gear 10 or its gear group is preferably arranged between the gear 9 and the gear group 11, 24.

Being optional, the reverse gear 24 could be absent.

The engagement devices 17, 18, 19, 20, 21, 22 described above can be operated by respective actuators (not shown), which are controlled by the control unit ECU. The control unit ECU controls the engagement devices 17, 18, 19, 20, 21, 22 by sending electrical control signals addressed to them.

The control unit ECU is configured to control the engagement devices 17, 18, 19, 20, 21, 22 through direct input command of the driver of the motor vehicle 1 or in an automatic manner following a gear shift control logic deployed in a specific software code, which can be stored in the control unit ECU.

The apparatus of the motor vehicle 1 can be provided with a dedicated control software code in the ECU of the transmission configured to recognize signals from the sensors installed in the motor vehicle 1, for example the torque request at the output shaft 16 and the angular speed of the input shaft 6, and to automatically define the gear shift without any intervention by the driver.

Hereinafter, some operating modes of the apparatus of the motor vehicle 1 will be described by way of example.

A first operating mode involves the motor vehicle 1 being parked, namely with the wheels 2 immobile or not rotating.

In this operating mode, the control unit ECU can control the engagement device 18 to rotationally fix the gearwheel 9' to the shaft 7, which, in turn, is connected to the shaft 6 through the engagement device 17. Furthermore, the control unit ECU controls the engagement device 20 so that the gearwheel 9'' remains free to rotate with respect to the shaft 16 around the axis D. In this way, the motor-generator 4 and the source 3 are connected to each other, while neither of them is connected to the axle or to the wheels 2. By so doing, the motor-generator 4 can generate electrical energy by means of the power supplied by the source 3 or start the source 3.

A second operating mode involves the movement of the motor vehicle 1 using the propulsion of the motor-generator 4 or, more in general, the connection between the wheels 2 or the axle and the motor-generator 4.

In this operating mode, the control unit ECU can control the engagement device 18 to rotationally fix the gearwheel 9' to the shaft 7, which, though, remains disconnected from the shaft 6 through a control of the engagement device 17 by means of the control unit ECU.

By so doing, the motor-generator 4 can transmit power to the shaft 7.

The control unit ECU can thus control one of the engagement devices 20, 21 to rotationally fix one of the gearwheels 9", 11", 24" to the shaft 16, thus respectively engaging one of the fourth gear ratio, the second gear ratio, or a reverse gear.

In this way, the electric motor-generator 4 at least contributes to the propulsion of the motor vehicle 1.

Indeed, in addition, the control unit ECU can control the engagement device 17 to connect the shaft 6 to the shaft 8, as well as one of the engagement devices 19, 22 to engage one of the odd ratios, so that both the source 3 and the motor-generator 4 contribute in parallel to the propulsion of the motor vehicle 1.

Owing to the above, the advantages of the apparatus according to the invention are evident.

The source 3 and the motor-generator 4 can be connected to the parked motor vehicle 1.

In addition, since the motor-generator 4 controls the rotation of the entire gear 9, the engagement device 20 can also be a simple dog-clutch, instead of a synchronizer. This leads to a significant reduction in the radial dimension of the engagement device 20, which can thus be placed in the same axial position along the axes B, D as the engagement device 18.

Furthermore, the motor-generator 4 can be used for the propulsion of the motor vehicle 1 with the most appropriate gear ratios, i.e. with the second gear ratio and the reverse gear (namely, when there is a greater torque request for the wheels 2), as well as with the fourth gear ratio for suburban roads.

In addition, the arrangement of the reverse gear 24 halfway between the gears 9, 10, 11 and the gears 12, 13, 14, 15 is ideal for a reduction in the overall dimensions of the gearbox 5, without an excessive increase in the complexity of the gearbox 5 itself.

Finally, the apparatus according to the invention can be subject to changes and variants, which, though, do not go beyond the scope of protection set forth in the appended claims.

In particular, the number, the shape and the arrangement of the components described and shown herein could be different.

Furthermore, each detail depicted in the drawings regarding the arrangement and size of the gears 9, 10, 11, 12, 13, 14, 15, 24 and of the engagement devices 17, 18, 19, 20, 21, 22, 23 must be considered as independent of the other details.

Similarly, the graphic representation of support elements such as for example the bearings for the shafts 7, 8, 16 or the other schematically shown bearings is to be considered merely explanatory and susceptible to variations.

Finally, the representation of figure 2 is merely schematic for a better understanding of the key aspects of the description, so it is not to be understood as perfectly realistic.

## Claims

1. Apparatus with a dual-clutch gearbox (5) for a motor vehicle (1), the dual-clutch gearbox (5) comprising
- an input shaft (6) to be connected to a power source (3) of the motor vehicle (1);
- a first shaft (7) carrying a plurality of first gearwheels (10', 11') and a fifth gearwheel (9'), each of the first gearwheels (10', 11') being carried in a fixed manner by the first shaft (7), thus defining an element of a set of first rotationally fixed gearwheels, or in a rotatable manner with respect to the first shaft (7), thus defining an element of a set of first engageable gearwheels;
- a second shaft (8) carrying a plurality of second gearwheels (12', 13', 14', 15'), each of the second gearwheels (12', 13', 14', 15') being carried in a fixed manner by the second shaft (8), thus defining an element of a set of second rotationally fixed gearwheels, or in a rotatable manner with respect to the second shaft (8), thus defining an element of a set of second engageable gearwheels;
- an output shaft (16) to be connected to an axle of the motor vehicle (1), the output shaft (16) carrying a plurality of third gearwheels (10", 11") meshing with the first gearwheels (10', 11') to form first gears (10, 11), a plurality of fourth gearwheels (12", 13", 14", 15") meshing with the second gearwheels (12', 13', 14", 15") to form second gears (12, 13, 14, 15), and a sixth gearwheel (9") meshing with the fifth gearwheel (9') to form a third gear (9), wherein the third and fourth gearwheels (10", 11", 12", 13" 14", 15") meshing with the first and second engageable gearwheels, respectively, are carried in a fixed manner by the output shaft (16), thus defining respective elements of a set of third rotationally fixed gearwheels, and wherein the third and fourth gearwheels (10" 11", 12", 13", 14", 15") meshing respectively with the first and second rotationally fixed gearwheels are carried in a rotatable manner with respect to the output shaft (16), thus defining respective elements of a set of third engageable gearwheels;
- a double clutch (17) selectively controllable to connect one of the first and second shafts (7, 8) with the input shaft (6);
- a first engagement means (18) for each of the first engageable gearwheels, the first engagement means (18) being controllable to rotationally fix the related one of the first engageable gearwheels to the first shaft (7) selectively;
- a second engagement means (19) for each of the second engageable gearwheels, the second engagement means (19) being controllable to rotationally fix the related one of the second engageable gearwheels to the second shaft (8) selectively;
- a third engagement means (20, 21, 22) for each of the third engageable gearwheels, the third engagement means (20, 21, 22) being controllable to rotationally fix the related one of the third engageable gearwheels to the output shaft (16) selectively;
the apparatus further comprising an electric motor-generator (4) having a rotor coupled to the fifth gearwheel (9') via a transmission (23), such that a rotation of the rotor can be transmitted to the fifth gearwheel (9') and vice versa,
wherein the fifth and sixth gearwheels (9', 9") are respectively carried in a rotatable manner with respect to the first shaft (7) and the output shaft (16), thus forming part of the set of first and third engageable gearwheels, respectively,
**characterized in that**
- the third engagement means (20) for the sixth gearwheel (9") is configured to exclusively engage the sixth gearwheel (9"), and/or **in that**
- the first engagement means (18) for the fifth gearwheel (9') is carried by the first shaft (7) axially between the fifth gearwheel (9') and a further gearwheel (10') of the first engageable gearwheels, the first engagement means (18) for the fifth gearwheel (9') being configured to rotationally fix, in a selective manner, one of the fifth gearwheel (9') and the further gearwheel (10') to the first shaft (7), whereby the further gearwheel (10') meshes with one of the third rotationally fixed gearwheels.

2. The apparatus according to claim 1, wherein the third engagement means (20) for the sixth gearwheel (9") is carried by the output shaft (16) axially between the sixth gearwheel (9'') and one of the third rotationally fixed gearwheels, or wherein the sixth gearwheel (9") is axially arranged between the third engagement means (20) for the sixth gearwheel (9") and the set of third and fourth gearwheels.

3. The apparatus according to claim 1 or 2, wherein the first shaft (7) extends along a straight axis (B).

4. The apparatus according to claim 3, wherein the dual-clutch gearbox (5) further comprises a reverse gear (24) comprising at least a seventh and an eighth gearwheel (24', 24") respectively carried in a fixed manner by a third shaft, defined by one of the first and second shafts (7, 8), and by the output shaft (16) in a rotatable manner with respect to the output shaft (16), or respectively carried by the third shaft in a rotatable manner with respect to the third shaft and in a fixed manner by the output shaft (16), the double-clutch gearbox (5) further comprising a fourth engagement means (21) controllable to rotationally fix the gearwheel being carried in a rotatable manner, among the seventh and eighth gearwheels (24', 24"), to the related carrying shaft among the third shaft and the output shaft (16).

5. The apparatus according to claim 4, wherein a gear (11) of the first gears (10, 11) and the other gears (10) of the first gears (10, 11) form a first gear group (11, 24) with the reverse gear (24) and a second gear group (10), respectively.

6. The apparatus according to claim 5, wherein the second gear group (10, 11) is arranged between the third gear (9) and the first gear group (11, 24) according to said straight axis (B).

7. The apparatus according to claim 5 or 6, wherein the first gear group (11, 24) is arranged between the second gear group (10, 11) and the second gears (12, 13, 14, 15) according to said straight axis (B).

8. The apparatus according to claim 7, wherein the third gear (9), the first gears (10, 11), and the second gears (12, 13, 14, 15) respectively comprise one gear, two gears, and four gears defining respective seven gear ratios numerically reorderable in an ascending order from a first gear ratio up to a seventh gear ratio so as to correspond to seven respective degrees of reduction in angular input speed, the degrees of reduction gradually decreasing from the first to the seventh gear ratio, the gear ratios being thus divisible into even and odd ratios according to their numerical order.

9. The apparatus according to claim 8, wherein the third and first gears (9, 10, 11) define the even ratios, the second gears (12, 13, 14, 15) defining the odd ratios.

10. The apparatus according to claim 8 or 9, wherein the third gear (9) defines the fourth gear ratio.

11. The apparatus according to any one of claims 8 to 10, wherein the first gears (10, 11) comprise a fourth and a fifth gear (10, 11), wherein
- the fourth gear (10) defines one of the fourth and sixth gear ratios and is arranged between the third gear (9) and the fifth gear (11) according to said straight axis (B), and
- the fifth gear (11) defines the second gear ratio, is part of the first gear group (11, 24), and is preferably arranged between the reverse gear (24) and the fourth gear (10) according to said straight axis (B).

12. The apparatus according to any one of claims 8 to 11, wherein the second gears (12, 13, 14, 15) comprise a sixth, a seventh, an eighth, and a ninth gear (12, 13, 14, 15), wherein
- the sixth and seventh gears (12, 13) form a third gear group (12, 13) and define the seventh gear ratio and the fifth gear ratio, respectively;
- the eighth and ninth gears (14, 15) form a fourth gear group (14, 15) and define the third and first gear ratio, respectively;
- one of the third gear group (12, 13) and the fourth gear group (14, 15) is arranged between the first gear group (11, 24) and the other of the third gear group (12, 13) and the fourth gear group (14, 15).

13. The apparatus according to claim 11 or 12, wherein
- the first gearwheel (10') of the fourth gear (10) is carried in a rotatable manner about the first shaft (7),
- the third gearwheel (11") of the fifth gear (11) is carried in a rotatable manner about the output shaft (16), and
- the eighth gearwheel (24") of the reverse gear (24) is carried in a rotatable manner about the output shaft (16).

14. The apparatus according to claim 12 or 13, wherein
- the second gearwheels (12', 13') of the sixth and seventh gears (12, 13) are carried in a rotatable manner about the second shaft (8), and
- the fourth gearwheels (14", 15") of the eighth and ninth gears (14, 15) are carried in a rotatable manner about the output shaft (16).

15. The apparatus according to any of claims 4 to 14, wherein the third shaft is defined by the first shaft (7).

16. The apparatus according to any of the preceding claims, wherein the first and second shafts (7, 8) are coaxial with each other.

17. The apparatus according to any one of the preceding claims, wherein the third engagement means (20) for the sixth gearwheel (9") comprises a dog-clutch configured to engage the sixth gearwheel (9") on the output shaft (16).

## Patentansprüche

1. Vorrichtung mit einem Doppelkupplungsgetriebe (5) für ein Kraftfahrzeug (1), wobei das Doppelkupplungsgetriebe (5) Folgendes umfasst:
- eine Eingangswelle (6), die mit einer Antriebsquelle (3) des Kraftfahrzeugs (1) zu verbinden ist;
- eine erste Welle (7), die eine Vielzahl von ersten Zahnrädern (10', 11') trägt, und ein fünftes Zahnrad (9'), wobei jedes der ersten Zahnräder (10', 11') in einer festen Weise von der ersten Welle (7) getragen wird, wodurch ein Element eines Satzes von ersten drehfest verbundenen Zahnrädern definiert wird, oder in einer drehbaren Weise in Bezug auf die erste Welle (7), wodurch ein Element eines Satzes von ersten in Eingriff bringbaren Zahnrädern definiert wird;
- eine zweite Welle (8), die eine Vielzahl von zweiten Zahnrädern (12', 13', 14', 15') trägt, wobei jedes der zweiten Zahnräder (12', 13', 14', 15') in einer festen Weise von der zweiten Welle (8) getragen wird, wodurch ein Element eines Satzes von zweiten drehfest verbundenen Zahnrädern definiert wird, oder in einer drehbaren Weise in Bezug auf die zweite Welle (8), wodurch ein Element eines Satzes von zweiten in Eingriff bringbaren Zahnrädern definiert wird;
- eine Ausgangswelle (16), die mit einer Achse des Kraftfahrzeugs (1) zu verbinden ist, wobei die Ausgangswelle (16) eine Vielzahl von dritten Zahnrädern (10", 11") trägt, die mit den ersten Zahnrädern (10', 11') kämmen, um erste Gänge (10, 11) zu bilden, eine Vielzahl von vierten Zahnrädern (12", 13", 14", 15"), die mit den zweiten Zahnrädern (12', 13', 14", 15") kämmen, um zweite Gänge (12, 13, 14, 15) zu bilden, und ein sechstes Zahnrad (9"), das mit dem fünften Zahnrad (9') kämmt, um einen dritten Gang (9) zu bilden, wobei die dritten und vierten Zahnräder (10", 11", 12", 13" 14", 15"), die jeweils mit den ersten und zweiten in Eingriff bringbaren Zahnrädern kämmen, fest von der Ausgangswelle (16) getragen werden und somit jeweilige Elemente eines Satzes dritter drehfest verbundener Zahnräder bilden, und wobei die dritten und vierten Zahnräder (10", 11", 12", 13", 14", 15"), die jeweils mit den ersten und zweiten drehfest verbundenen Zahnrädern kämmen, in einer drehbaren Weise in Bezug auf die Ausgangswelle (16) getragen werden und somit jeweilige Elemente eines Satzes von dritten in Eingriff bringbaren Zahnrädern definieren;
- eine Doppelkupplung (17), die wahlweise steuerbar ist, um die erste oder zweite Welle (7, 8) mit der Eingangswelle (6) zu verbinden;
- erste Eingriffsmittel (18) für jedes der in Eingriff bringbaren ersten Zahnräder, wobei die ersten Eingriffsmittel (18) steuerbar sind, um das zugehörige der ersten in Eingriff bringbaren Zahnräder wahlweise drehfest mit der ersten Welle (7) zu verbinden;
- zweite Eingriffsmittel (19) für jedes der in Eingriff bringbaren zweiten Zahnräder, wobei die zweiten Eingriffsmittel (19) steuerbar sind, um das zugehörige der zweiten in Eingriff bringbaren Zahnräder wahlweise drehfest mit der zweiten Welle (8) zu verbinden;
- dritte Eingriffsmittel (20, 21, 22) für jedes der in Eingriff bringbaren dritten Zahnräder, wobei die dritten Eingriffsmittel (20, 21, 22) steuerbar sind, um das zugehörige der dritten in Eingriff bringbaren Zahnräder wahlweise drehfest mit der Ausgangswelle (16) zu verbinden;
wobei die Vorrichtung ferner einen Elektromotor-Generator (4) umfasst, der einen Rotor aufweist, der über ein Getriebe (9) mit dem fünften Zahnrad (23') gekuppelt ist, sodass eine Drehung des Rotors auf das fünfte Zahnrad (9') und umgekehrt übertragen werden kann.
wobei das fünfte und das sechste Zahnrad (9', 9") jeweils gegenüber der ersten Welle (7) bzw. der Ausgangswelle (16) drehbar gelagert sind und somit jeweils Teil des Satzes aus ersten bzw. dritten in Eingriff bringbaren Zahnrädern bilden,
**dadurch gekennzeichnet, dass**
- die dritten Eingriffsmittel (20) für das sechste Zahnrad (9") so ausgebildet sind, dass sie ausschließlich in das sechste Zahnrad (9") eingreifen, und/oder dass
- die ersten Eingriffsmittel (18) für das fünfte Zahnrad (9') von der ersten Welle (7) axial zwischen dem fünften Zahnrad (9') und einem weiteren Zahnrad (10') der ersten eingreifbaren Zahnräder getragen wird, wobei die ersten Eingriffsmittel (18) für das fünfte Zahnrad (9') so ausgebildet ist, dass sie wahlweise entweder das fünfte Zahnrad (9') oder das weitere Zahnrad (10') drehfest an der ersten Welle (7) drehfest zu fixieren, wobei das weitere Zahnrad (10') mit einem der dritten drehfest fixierten Zahnräder in Eingriff steht.

2. Vorrichtung nach Anspruch 1, wobei die dritten Eingriffsmittel (20) für das sechste Zahnrad (9',) von der Abtriebswelle (16) axial zwischen dem sechsten Zahnrad (9") und einem der dritten drehfesten Zahnräder getragen werden, oder wobei das sechste Zahnrad (9") axial zwischen den dritten Eingriffsmitteln (20) für das sechste Zahnrad (9") und dem Satz aus dritten und vierten Zahnrädern axial angeordnet ist.

3. Vorrichtung nach Anspruch 1 oder 2, wobei sich die erste Welle (7) entlang einer geraden Achse (B) erstreckt.

4. Vorrichtung nach Anspruch 3, wobei das Doppelkupplungsgetriebe (5) weiter einen Rückwärtsgang (24) umfasst, der mindestens ein siebtes und ein achtes Zahnrad (24', 24"), die jeweils fest von einer dritten Welle, die durch eine der ersten und zweiten Wellen (7, 8) definiert ist, getragen werden und durch die Ausgangswelle (16) im Hinblick auf die Ausgangswelle (16) drehbar gelagert sind, oder jeweils von der dritten Welle im Hinblick auf die dritte Welle drehbar und von der Ausgangswelle (16) fest gelagert werden, wobei das Doppelkupplungsgetriebe (5) ferner vierte Eingriffsmittel (21) umfasst, die so steuerbar ist, dass sie das drehbar gelagerte Zahnrad - wahlweise das siebte oder das achte Zahnrad (24', 24") - drehfest an der entsprechenden Tragwelle - wahlweise der dritten Welle oder der Ausgangswelle (16) - fixiert.

5. Vorrichtung nach Anspruch 4, wobei ein Zahnrad (11) der ersten Zahnräder (10, 11) und die anderen Zahnräder (10) der ersten Zahnräder (10, 11) jeweils mit dem Rückwärtsgang (24) eine erste Ganggruppe (11, 24) und eine zweite Ganggruppe (10) bilden.

6. Vorrichtung nach Anspruch 5, wobei die zweite Ganggruppe (10, 11) entlang der geraden Achse (B) zwischen dem dritten Gang (9) und der ersten Ganggruppe (11, 24) angeordnet ist.

7. Vorrichtung nach Anspruch 5 oder 6, wobei die erste Zahnradgruppe (11, 24) zwischen der zweiten Zahnradgruppe (10, 11) und den zweiten Zahnrädern (12, 13, 14, 15) entlang der geraden Achse (B) angeordnet ist.

8. Vorrichtung nach Anspruch 7, wobei der dritte Gang (9), die ersten Gänge (10, 11) und die zweiten Gänge (12, 13, 14, 15) jeweils einen Gang, zwei Gänge bzw. vier Gänge umfassen, die jeweils sieben Übersetzungsverhältnisse definieren, die numerisch in aufsteigender Reihenfolge von einem ersten bis zu einem siebten Übersetzungsverhältnis angeordnet werden können, sodass sie sieben jeweiligen Graden der Untersetzung der Winkel-Eingangsdrehzahl entsprechen, wobei die Graden der Untersetzung vom ersten bis zum siebten Übersetzungsverhältnis allmählich verringert werden und die Übersetzungsverhältnisse somit gemäß ihrer numerischen Reihenfolge in gerade und ungerade Verhältnisse unterteilt werden können.

9. Vorrichtung nach Anspruch 8, wobei der dritte und der erste Gang (9, 10, 11) die geraden Übersetzungsverhältnisse definieren und der zweite Gang (12, 13, 14, 15) die ungeraden Übersetzungsverhältnisse definiert.

10. Vorrichtung nach Anspruch 8 oder 9, wobei der dritte Gang (9) das vierte Übersetzungsverhältnis bestimmt.

11. Vorrichtung nach einem der Ansprüche 8 bis 10, wobei der erste Gang (10, 11) einen vierten und einen fünften Gang (10, 11) umfasst, wobei
- der vierte Gang (10) eines der Übersetzungsverhältnisse des vierten und des sechsten Gangs definiert und entsprechend der geraden Achse (B) zwischen dem dritten Gang (9) und dem fünften Gang (11) angeordnet ist, und
- der fünfte Gang (11) das zweite Übersetzungsverhältnis bestimmt, Teil der ersten Ganggruppe (11, 24) ist und vorzugsweise entlang der geraden Achse (B) zwischen dem Rückwärtsgang (24) und dem vierten Gang (10) angeordnet ist.

12. Vorrichtung nach einem der Ansprüche 8 bis 11, wobei die zweiten Gänge (12, 13, 14, 15) einen sechsten, einen siebten, einen achten und einen neunten Gang (12, 13, 14, 15) umfassen, wobei
- der sechste und der siebte Gang (12, 13) eine dritte Ganggruppe (12, 13) bilden und jeweils das Übersetzungsverhältnis des siebten und des fünften Gangs bestimmen;
- der achte und der neunte Gang (14, 15) eine vierte Ganggruppe (14, 15) bilden und jeweils das Übersetzungsverhältnis des dritten und des ersten Gangs bestimmen;
- eine der dritten Ganggruppe (12, 13) oder der vierten Ganggruppe (14, 15) zwischen der ersten Ganggruppe (11, 24) und der jeweils anderen der dritten Ganggruppe (12, 13) und der vierten Ganggruppe (14, 15) angeordnet ist.

13. Vorrichtung nach Anspruch 11 oder 12, wobei
- das erste Zahnrad (10') des vierten Gangs (10) drehbar um die erste Welle (7) gelagert ist,
- das dritte Zahnrad (11") des fünften Gangs (11) drehbar um die Ausgangswelle (16) gelagert ist, und
- das achte Zahnrad (24") des Rückwärtsgangs (24) drehbar um die Ausgangswelle (16) gelagert ist.

14. Vorrichtung nach Anspruch 12 oder 13, wobei
- die zweiten Zahnräder (12', 13') des sechsten und siebten Gangs (12, 13) um die zweite Welle (8) drehbar gelagert sind, und
- die vierten Zahnräder (14", 15") des achten und neunten Gangs (14, 15) drehbar um die Ausgangswelle (16) gelagert sind.

15. Vorrichtung nach einem der Ansprüche 4 bis 14, wobei die dritte Welle durch die erste Welle (7) gebildet wird.

16. Vorrichtung nach einem der vorhergehenden Ansprüche, wobei die erste und die zweite Welle (7, 8) koaxial zueinander sind.

17. Vorrichtung nach einem der vorhergehenden Ansprüche, wobei die dritte Eingriffsmittel (20) für das sechste Zahnrad (9") eine Klauenkupplung umfasst, die so ausgelegt ist, dass sie mit dem sechsten Zahnrad (9") auf der Ausgangswelle (16) in Eingriff kommt.

## Revendications

1. Dispositif avec une boîte de vitesses à double embrayage (5) pour un véhicule automobile (1), la boîte de vitesses à double embrayage (5) comprenant
- un arbre d'entrée (6) à relier à une source d'énergie (3) du véhicule automobile (1) ;
- un premier arbre (7) portant une pluralité de premières roues dentées (10', 11') et une cinquième roue dentée (9'), chacune des premières roues dentées (10', 11') étant portée de manière fixe par le premier arbre (7), définissant ainsi un élément d'un ensemble de premières roues dentées fixes en rotation, ou de manière rotative par rapport au premier arbre (7), définissant ainsi un élément d'un ensemble de premières roues dentées pouvant être mises en prise ;
- un deuxième arbre (8) portant une pluralité de deuxièmes roues dentées (12', 13', 14', 15'), chacune des deuxièmes roues dentées (12', 13', 14', 15') étant portée de manière fixe par le deuxième arbre (8), définissant ainsi un élément d'un ensemble de deuxièmes roues dentées fixes en rotation, ou de manière rotative par rapport au deuxième arbre (8), définissant ainsi un élément d'un ensemble de deuxièmes roues dentées pouvant être mises en prise ;
- un arbre de sortie (16) destiné à être relié à un essieu du véhicule automobile (1), l'arbre de sortie (16) portant une pluralité de troisièmes roues dentées (10", 11'') s'engrenant avec les premières roues dentées (10', 11') pour former des premières vitesses (10, 11), une pluralité de quatrièmes roues dentées (12", 13", 14", 15") s'engrenant avec les deuxièmes roues dentées (12', 13', 14", 15") pour former des deuxièmes vitesses (12, 13, 14, 15), et une sixième roue dentée (9") s'engrenant avec la cinquième roue dentée (9') pour former une troisième vitesse (9), les troisièmes et quatrièmes roues dentées (10", 11", 12", 13" 14", 15") s'engrenant avec les première et deuxième roues dentées pouvant être mises en prise, respectivement, sont portées de manière fixe par l'arbre de sortie (16), définissant ainsi les éléments respectifs d'un ensemble de troisièmes roues dentées fixes en rotation, et les troisième et quatrième roues dentées (10", 11", 12", 13", 14", 15") s'engrenant respectivement avec les première et deuxième roues dentées fixes en rotation étant portées de manière rotative par rapport à l'arbre de sortie (16), définissant ainsi les éléments respectifs d'un ensemble de troisièmes roues dentées pouvant être mises en prise ;
- un double embrayage (17) pouvant être commandé sélectivement pour relier l'un des premier et deuxième arbres (7, 8) à l'arbre d'entrée (6) ;
- un premier moyen de mise en prise (18) pour chacune des premières roues dentées pouvant être mises en prise, le premier moyen de mise en prise (18) pouvant être commandé pour fixer sélectivement en rotation celle correspondante des premières roues dentées pouvant être mises en prise sur le premier arbre (7) ;
- un deuxième moyen de mise en prise (19) pour chacune des deuxièmes roues dentées pouvant être mises en prise, le deuxième moyen de mise en prise (19) pouvant être commandé pour fixer sélectivement en rotation celle correspondante des deuxièmes roues dentées pouvant être mises en prise sur le deuxième arbre (8) ;
- un troisième moyen de mise en prise (20, 21, 22) pour chacune des troisièmes roues dentées pouvant être mises en prise, le troisième moyen de mise en prise (20, 21, 22) pouvant être commandé pour fixer sélectivement en rotation celle correspondante des troisièmes roues dentées pouvant être mises en prise sur l'arbre de sortie (16) ;
le dispositif comprenant en outre un moteur-générateur électrique (4) ayant un rotor couplé à la cinquième roue dentée (9') par l'intermédiaire d'une transmission (23), de sorte qu'une rotation du rotor peut être transmise à la cinquième roue dentée (9') et vice versa,
les cinquième et sixième roues dentées (9', 9") étant respectivement portées de manière rotative par rapport au premier arbre (7) et à l'arbre de sortie (16), faisant ainsi partie, respectivement, de l'ensemble des première et troisième roues dentées pouvant se mettre en prise,
**caractérisé en ce que**
- le troisième moyen de mise en prise (20) de la sixième roue dentée (9") est configuré pour se mettre en prise exclusivement avec la sixième roue dentée (9"), et/ou **en ce que**
- le premier moyen de mise en prise (18) de la cinquième roue dentée (9') est porté par le premier arbre (7) axialement, entre la cinquième roue dentée (9') et une roue dentée (10') supplémentaire des premières roues dentées pouvant se mettre en prise, le premier moyen de mise en prise (18) de la cinquième roue dentée (9') étant configuré pour fixer en rotation, de manière sélective, l'une parmi la cinquième roue dentée (9') et la roue dentée (10') supplémentaire par rapport au premier arbre (7), de sorte que la roue dentée (10') supplémentaire s'engrène avec l'une des troisièmes roues dentées fixées en rotation.

2. Dispositif selon la revendication 1, le troisième moyen de mise en prise (20) de la sixième roue dentée (9") étant porté par l'arbre de sortie (16) axialement entre la sixième roue dentée (9") et l'une des troisièmes roues dentées fixes en rotation, ou la sixième roue dentée (9") étant disposée axialement entre le troisième moyen de mise en prise (20) de la sixième roue dentée (9") et l'ensemble des troisième et quatrième roues dentées.

3. Dispositif selon la revendication 1 ou 2, le premier arbre (7) s'étendant le long d'un axe rectiligne (B).

4. Dispositif selon la revendication 3, la boîte de vitesses à double embrayage (5) comprenant en outre une marche arrière (24) comprenant au moins une septième et une huitième roue dentée (24', 24") portées respectivement de manière fixe par un troisième arbre, défini par l'un des premier et deuxième arbres (7, 8), et par l'arbre de sortie (16) de manière rotative par rapport à l'arbre de sortie (16), ou respectivement portées sur le troisième arbre de manière rotative par rapport au troisième arbre et de manière fixe par rapport à l'arbre de sortie (16), la boîte de vitesses à double embrayage (5) comprenant en outre un quatrième moyen de mise en prise (21) pouvant être commandé pour fixer en rotation la roue dentée portée de manière rotative, parmi les septième et huitième roues dentées (24', 24"), sur l'arbre porteur correspondant parmi le troisième arbre et l'arbre de sortie (16).

5. Dispositif selon la revendication 4, une vitesse (11) des premières vitesses (10, 11) et les autres vitesses (10) des premières vitesses (10, 11) formant, respectivement, un premier groupe de vitesses (11, 24) avec la marche arrière (24) et un deuxième groupe de vitesses (10).

6. Dispositif selon la revendication 5, le deuxième groupe de vitesses (10, 11) étant disposé entre la troisième vitesse (9) et le premier groupe de vitesses (11, 24) selon ledit axe rectiligne (B).

7. Dispositif selon la revendication 5 ou 6, le premier groupe de vitesses (11, 24) étant disposé entre le deuxième groupe de vitesses (10, 11) et les deuxièmes vitesses (12, 13, 14, 15) selon ledit axe rectiligne (B).

8. Dispositif selon la revendication 7, la troisième vitesse (9), les premières vitesses (10, 11) et les deuxièmes vitesses (12, 13, 14, 15) comprenant respectivement une vitesse, deux vitesses et quatre vitesses définissant sept rapports de vitesse respectifs pouvant être réordonnés numériquement par ordre croissant, du premier rapport de vitesse jusqu'au septième rapport de vitesse, de manière à correspondre à sept degrés de réduction respectifs de la vitesse angulaire d'entrée, les degrés de réduction diminuant progressivement du premier au septième rapport de vitesse, les rapports de vitesse pouvant ainsi être divisés en rapports pairs et impairs selon leur ordre numérique.

9. Dispositif selon la revendication 8, les troisième et première vitesses (9, 10, 11) définissant les rapports pairs, les deuxièmes vitesses (12, 13, 14, 15) définissant les rapports impairs.

10. Dispositif selon la revendication 8 ou 9, la troisième vitesse (9) définissant le quatrième rapport de vitesse.

11. Dispositif selon l'une quelconque des revendications 8 à 10, les premières vitesses (10, 11) comprenant une quatrième et une cinquième vitesse (10, 11), dans lequel
- la quatrième vitesse (10) définit l'un parmi les quatrième et sixième rapports de vitesse et est disposée entre la troisième vitesse (9) et la cinquième vitesse (11) selon ledit axe rectiligne (B), et
- la cinquième vitesse (11) qui définit le deuxième rapport de vitesse, fait partie du premier groupe de vitesses (11, 24) et est, de préférence, disposé entre la marche arrière (24) et la quatrième vitesse (10) selon ledit axe rectiligne (B).

12. Dispositif selon l'une quelconque des revendications 8 à 11, les deuxièmes vitesses (12, 13, 14, 15) comprenant une sixième, une septième, une huitième et une neuvième vitesse (12, 13, 14, 15), dans lequel
- les sixième et septième vitesses (12, 13) forment un troisième groupe de vitesses (12, 13) et définissent, respectivement, le septième rapport de vitesse et le cinquième rapport de vitesse ;
- les huitième et neuvième vitesses (14, 15) forment un quatrième groupe de vitesses (14, 15) et définissent, respectivement, les troisième et premier rapports de vitesse ;
- l'un parmi le troisième groupe de vitesses (12, 13) et le quatrième groupe de vitesses (14, 15) est disposé entre le premier groupe de vitesses (11, 24) et l'autre des troisième groupe de vitesses (12, 13) et quatrième groupe de vitesses (14, 15).

13. Appareil selon la revendication 11 ou 12, dans lequel
- la première roue dentée (10') de la quatrième vitesse (10) est portée de manière à pouvoir tourner autour du premier arbre (7),
- la troisième roue dentée (11") de la cinquième vitesse (11) est portée de manière à pouvoir tourner autour de l'arbre de sortie (16), et
- la huitième roue dentée (24") de la marche arrière (24) est portée de manière à pouvoir tourner autour de l'arbre de sortie (16).

14. Appareil selon la revendication 12 ou 13, dans lequel
- les deuxièmes roues dentées (12', 13') des sixième et septième vitesses (12, 13) sont portées de manière à pouvoir tourner autour du deuxième arbre (8), et
- les quatrièmes roues dentées (14", 15") des huitième et neuvième vitesses (14, 15) sont portées de manière à pouvoir tourner autour de l'arbre de sortie (16).

15. Dispositif selon l'une quelconque des revendications 4 à 14, le troisième arbre étant défini par le premier arbre (7).

16. Appareil selon l'une quelconque des revendications précédentes, les premier et deuxième arbres (7, 8) étant coaxiaux l'un par rapport à l'autre.

17. Dispositif selon l'une quelconque des revendications précédentes, le troisième moyen de mise en prise (20) de la sixième roue dentée (9") comprenant un embrayage à clabot configuré pour se mettre en prise avec la sixième roue dentée (9") sur l'arbre de sortie (16).
